# EUROPÄISCHE PATENTSCHRIFT

(11) **EP 2 917 013 B1**
(45) Veröffentlichungstag und Bekanntmachung des Hinweises auf die Patenterteilung: **22.02.2017**
(21) Anmeldenummer: 13782704.4
(22) Anmeldetag: 23.10.2013
(51) Int. Cl.: B29C 45/16, B29C 45/00, B29C 67/24

(54) **EINEN TRÄGER ZUM ABDICHTEN EINER WERKZEUGKAVITÄT ENTHALTENDES MEHRKOMPONENTEN-KUNSTSTOFFBAUTEIL, VORRICHTUNG UND VERFAHREN ZUM HERSTELLEN DES MEHRKOMPONENTEN-KUNSTSTOFFBAUTEILS**
MULTICOMPONENT PLASTIC PART CONTAINING SUPPORT FOR SEALING A TOOL CAVITY, DEVICE AND METHOD FOR PRODUCING THE MULTICOMPONENT PLASTIC PART
ÉLÉMENT EN MATIÈRE PLASTIQUE À PLUSIEURS COMPOSANTS CONTENANT SUPPORT SERVANT À RENDRE ÉTANCHE UNE CAVITÉ DE MOULE, DISPOSITIF ET PROCÉDÉ DE FABRICATION DUDIT ÉLÉMENT EN MATIÈRE PLASTIQUE À PLUSIEURS COMPOSANTS

(30) Priorität: 06.11.2012 DE 102012110602
(43) Veröffentlichungstag der Anmeldung: 16.09.2015
(73) Patentinhaber: KraussMaffei Technologies GmbH, 80997 München (DE)
(72) Erfinder: BAYER, Stefan, 85653 Aying (DE)
(74) Vertreter: Wilhelm, Ludwig
(86) Internationale Anmeldenummer: PCT/EP2013/072193
(87) Internationale Veröffentlichungsnummer: WO 2014/072178

(56) Entgegenhaltungen:
- DE-A1-102011 000 494
- DE-A1-102011 017 408
- US-A1- 2007 284 902
- US-A1- 2008 073 807
- "HOCHWERTIGE PREMIUM-OBERFLAECHE AUS SPRITZGIESS- UND REAKTIONSTECHNIK", KUNSTOFFE, CARL HANSER VERLAG, MUNCHEN, DE, Bd. 10, 1. Januar 2004 (2004-01-01), Seite 180, XP001205066, ISSN: 0023-5563

## Beschreibung

Im Zuge der Verbesserung der äußeren Erscheinungsform von Kunststoffbauteilen wurden verschiedene Verfahren entwickelt, um die entsprechenden Oberflächen möglichst ansprechend zu gestalten. Hierbei sind insbesondere das SkinForm- und das ColorForm-Verfahren zu nennen, bei denen Kunststoffbauteile in einem geschlossenen Werkzeug mit einer oder mehreren Komponenten überflutet werden können. Auf diese Weise können Mehrkomponenten-Kunststoffbauteile hergestellt werden. Das Überfluten erfolgt mit einem sehr niedrigviskosen Material wie beispielsweise Polyurethan oder Polyurea. Da diese eine oder mehreren Komponenten aus niedrigviskosem Material sind, also sehr dünnflüssig sind, kann die Werkzeugkavität im Werkzeug, das aus Stahl hergestellt ist, nicht durch einen Stahlträger abgedichtet werden. Die Abdichtung der Werkzeugkavität muss daher immer durch einen Träger aus Kunststoff erfolgen, um eine ausreichende Dichtigkeit zu gewährleisten. Darüber hinaus ist es erforderlich, beim Überfluten des Kunststoffträgers eine Anguss- und eine Überlaufkavität vorzusehen, da durch die gute Abdichtung von Stahl auf Kunststoff keine Entlüftung erfolgen kann, wie sie sonst bei gebräuchlichen Spritzgießwerkzeugen über die Trennebene erfolgt. Die Luft in der Kavität - und gegebenenfalls auch Überflutungsmaterial - wird somit in die sogenannte Überlaufkavität gedrückt.

Auf Grund der eingangs beschriebenen Vorgehensweise bei der Herstellung von Mehrkomponenten-Kunststoffbauteilen ist somit am Außenrand der beschichteten Kunststoffteile immer ein Rand zu sehen, der durch das Trägermaterial gebildet ist.

Bei vielen Bauteilen ist dies jedoch unerwünscht. Daher wird hier oft ein Umbug gefordert, der mit den Vorrichtungen gemäß dem Stand der Technik nicht umsetzbar ist, da hier sonst eine Trennungslinie durch das Werkzeug erkennbar ist, welche üblicherweise nicht den Qualitätsansprüchen der Hersteller und/oder Kunden entspricht. Darüber hinaus ist es nachteilig, dass die Überlaufkavität und die Angusskavität meistens in einem separaten Arbeitsgang entfernt werden müssen. Zudem sind die durch Stanzen oder Lasern abgetrennten Bereiche von der Seite immer erkennbar und beeinträchtigen somit die erzielbare Qualität des fertigen Mehrkomponenten-Kunststoffbauteils.

Die Dokumente US2007/0284902A1 und DE 10 2011 000494 A1 offenbaren einkomponentige Kunststoffteile ohne zusätzliche Überflutung.

Das Dokument "Hochwertige Premium-Oberfläche aus Spritzgieß- und Reaktionstechnik", Kunststoffe, Carl Hanser Verlag München, DE, Bd.10, 1. Januar 2004 (2004-01-01), Seite 180, XP001205066, ISSN: 0023-5563, offenbart ein Verfahren zur Herstellung eines Mehrkomponenten-Kunststoffbauteils, bei der ein Kunststoffbauteil mit mindestens einer Komponente überflutet wird.

Der vorliegenden Erfindung liegt die Aufgabe zugrunde, ein Mehrkomponenten-Kunststoffbauteil mit einem Träger zum Abdichten einer Werkzeugkavität bei der Herstellung eines llJlehrkomponenten-Kunststoffbauteils, eine Vorrichtung sowie ein Verfahren zur Herstellung eines Mehrkomponenten-Kunststoffbauteils vorzuschlagen, womit die vorgenannten Nachteile beseitigt werden können und es ermöglicht wird, qualitativ hochwertige, mit ästhetisch sehr ansprechenden und gleichmäßigen Oberflächen ausgestattete Mehrkomponenten-Kunststoffbauteile ohne sichtbare Ränder, insbesondere Ränder zum Kunststoffträger, bereitzustellen bzw. herzustellen. Die Herstellung dieser Mehrkomponenten-Kunststoffbauteile soll kostengünstig und effizient erfolgen.

Diese Aufgabe wird gelöst durch ein Mehrkomponenten-Kunststoffbauteil gemäß Anspruch 1, eine Vorrichtung zum Herstellen eines Mehrkomponenten-Kunststoffbauteils gemäß Anspruch 6 bzw. ein Verfahren zur Herstellung eines Mehrkomponenten-Kunststoffbauteils gemäß Anspruch 8.

Vorteilhafte Weiterbildungen der Erfindung sind Gegenstand der abhängigen Ansprüche.

Es wird ein aus Kunststoff hergestellter Träger zum Abdichten einer Werkzeugkavität bei der Herstellung eines Mehrkomponenten-Kunststoffbauteils angegeben, wobei bei der Herstellung ein Kunststoffbauteil und der Träger mit mindestens einer Komponente überflutet wird und der Träger dadurch zu einem integralen Bestandteil des Mehrkomponenten-Kunststoffbauteils wird. Als derartige Überflutungsverfahren kommen insbesondere das SkinForm- und das ColorForm-Verfahren in Betracht, wie sie beispielsweise bei der KraussMaffei Group eingesetzt werden.

Der Träger weist einen zentralen Bereich auf, mit dem die Werkzeugkavität abgedichtet werden kann, wenn ein zu überflutendes Kunststoffbauteil in die Werkzeugkavität eingesetzt ist. Der Träger ist mehr oder weniger flächig ausgebildet und weist eine erste Hauptseite auf, die der Werkzeugkavität zugewandt ist, sowie eine zweite Hauptseite, die von der ersten Hauptseite und damit von der Kavität abgewandt ist. Der Träger zeichnet sich dadurch aus, dass er außerdem einen Umfangsrand aufweist, der sich über den zentralen Bereich hinaus und damit auch über den äußeren Umfang der Werkzeugkavität hinaus - also in Richtung der Trennebene vom Kunststoffbauteil weg - erstreckt. Der Umfangsrand ist dabei so ausgestaltet - was auch beinhaltet, dass er entsprechend in dem Werkzeug angeordnet werden kann -,dass er auf seiner ersten Hauptseite von der mindestens einen Komponente (oder auch von mehreren Komponenten, falls dies erforderlich bzw. gewünscht ist) überflutet werden kann. D.h. mit anderen Worten, dass die Anordnung und Ausgestaltung des Trägers so getroffen ist, dass ein nahtloser und somit nicht sichtbarer Übergang der flüssigen Komponente von dem in das Werkzeug eingesetzten Kunststoffbauteil auf die erste Hauptseite ermöglicht wird. Darüber hinaus ist es wesentlich, dass der Umfangsrand einen ersten, äußeren, Randbereich aufweist, der zur Bildung eines umschlagbaren Überstands vorgesehen ist, sowie einen zwischen den zentralen Bereich und dem ersten Randbereich angeordneten zweiten Randbereich aufweist, der zur Bildung eines sog. Filmscharniers geeignet ist. Dieses Filmscharnier kann nach dem Überfluten durch die mindestens eine Komponente geknickt bzw. umgeschlagen oder umgeklappt werden, ohne dass die Komponente, mit der das Filmscharnier überzogen ist, absplittert bzw. abblättert. Es ist klar, dass mit dem Umschlagen des Filmscharniers bzw. des zweiten Randbereichs auch der erste Randbereich mit umgeschlagen bzw. umgeklappt wird. Dieser erste Randbereich kann um etwa 180° umgeklappt bzw. umgeschlagen werden, wobei die auf dem Filmscharnier befindliche Komponente sicherstellt, dass - bei daran befestigtem Kunststoffbauteil - kein sichtbarer Rand zwischen Kunststoffbauteil und Träger besteht.

Gemäß einer bevorzugten Ausführungsform des Trägers sind auf bzw. an der zweiten Hauptseite des ersten Randbereichs erste Verbindungselemente vorgesehen, und an bzw. auf der zweiten Hauptseite des zentralen Bereichs sind zweite Verbindungselemente vorgesehen. Die ersten Verbindungselemente und die zweiten Verbindungselemente sind dabei so ausgestaltet und angeordnet, dass nach einem Umbiegen des ersten Randbereichs in der Weise, dass die zweite Hauptseite des ersten Randbereichs der zweiten Hauptseite des zentralen Bereichs zumindest im Wesentlichen gegenüberliegt, jeweils ein erstes Verbindungselement mit einem zweiten Verbindungselement verbunden ist. In anderen Worten ist in dieser Stellung der umgeschlagene Randbereich in der umgeschlagenen Stellung fixiert. Die ersten Verbindungselemente und die zweiten Verbindungselemente sind in besonders einfacher und zweckmäßiger Weise als jeweils passende, miteinander in Eingriff bringbare Rastelemente ausgebildet. Derartige Rastelemente könnten beispielsweise zu einer geschlossenen, umlaufenden Rastnut und einer umlaufenden Rastnase zusammengefasst sein. In vorteilhafter Weiterbildung der Erfindung kann jedoch auch vorgesehen sein, dass jeweils ein erstes Verbindungselement und ein diesem zugeordnetes zweites Verbindungselement ein Paar bilden, welches als Rastvorsprung einerseits bzw. als zugehörige Rastausnehmung andererseits ausgestaltet ist. Die genaue Art und Ausgestaltung dieser Rastvorsprünge und Rastausnehmungen können zweckmäßigerweise an die Erfordernisse angepasst werden. So kann beispielsweise jedes Paar als eine Art Druckknopf mit entsprechender Ausnehmung gebildet sein. Die Paare können jedoch auch als jeweilige Rastnasen ausgestaltet sein, die sich hintergreifen.

Es ist von Vorteil, wenn sich von der ersten Hauptseite des ersten Randbereichs aus mehrere Haltevorsprünge von der ersten Hauptseite weg erstrecken. Dabei ist es bevorzugt, dass die Haltevorsprünge in etwa senkrecht zur ersten Hauptseite - und damit auch senkrecht zur Trennebene im Werkzeug - abstehen, und zwar weiter von dem ersten Randbereich abstehen, als es der Schichtdicke entspricht, welche die Komponente aufweist, mit der der Träger überzogen wird bzw. werden soll. D.h., sofern die Haltevorsprünge weiter von der ersten Hauptfläche abstehen als die Schichtdicke der Komponente, bilden die Haltevorsprünge gleichsam Stifte oder Dome, in die die flächig angeordnete Komponente, weiche den Träger und damit den ersten Randbereich des Trägers überzieht, "eingehängt" ist. Sofern die Haltevorsprünge so ausgebildet sind, dass die Komponenten sie überdecken, wird dadurch ebenfalls ein bestimmter Halteeffekt erzielt. Dieser Halteeffekt kann jedoch vergrößert werden, wenn die Haltevorsprünge über die Komponente hinausragen. Zwischen den Stiften bzw. Domen wird eine mechanische Verbindung zwischen dem Träger und dem Material der durch Überfluten aufgetragenen Komponente hergestellt. Auf diese Weise wird ein Ablösen der beiden Materialien durch die beim Umlegen bzw. Umfalten auftretenden Kräfte verhindert.

Die der Erfindung zu Grunde liegende Aufgabe wird mit einem Mehrkomponenten-Kunststoffbauteil gelöst, welches einen Träger gemäß vorstehender Beschreibung enthält, dessen erster Randbereich so umgebogen ist, dass seine zweite Hauptseite gegenüber der zweiten Hauptseite des zentralen Bereichs zu liegen kommt. Das erfindungsgemäße Mehrkomponenten-Kunststoffbauteil umfasst des Weiteren ein auf die erste Hauptseite des zentralen

Bereichs des Trägers an- bzw. aufgesetztes Kunststoffbauteil sowie mindestens eine durch Überfluten aufgebrachte Komponente, welche das Kunststoffbauteil einerseits und zumindest die erste Hauptseite des zweiten Randbereichs bzw. des Filmscharniers andererseits bedeckt. Dadurch ist sichergestellt, dass nicht nur das Kunststoffbauteil als solches von der Komponente überdeckt ist, die ein bestimmtes äußeres Erscheinungsbild vermitteln soll, sondern auch das Filmscharnier bzw. der zweite Randbereich. Dadurch wird erreicht, dass kein Rand zwischen Kunststoffbauteil und Kunststoffträger zu sehen ist. Es ist klar, dass es Vorteile bringen kann, wenn die Komponente auch den ersten (äußeren) Randbereich, der umgeschlagen bzw. umgeklappt ist, überdeckt. Dadurch kann auch die vom Kunststoffbauteil abgewandte, beispielsweise eine Unterseite bildende, Seite des Mehrkomponenten-Kunststoffbauteils mit der gleichen Oberfläche ausgestattet werden, ohne dass ein als störend empfundener Rand bzw. eine Farb- oder Schattierungsabweichung auftritt. Die in Verbindung mit den bevorzugten oder vorteilhaften Ausführungsformen des erfindungsgemäßen Trägers beschriebenen Vorteile und Merkmale sind natürlich in gleicher Weise in Verbindung mit dem erfindungsgemäßen Mehrkomponenten-Kunststoffbauteil zu nennen. Aus Gründen der Übersichtlichkeit der Darstellung wird auf eine erneute, gesonderte Darstellung dieser Vorteile und Merkmale verzichtet.

Die der Erfindung zu Grunde liegende Aufgabe wird auch mit einer Vorrichtung zum Herstellen eines Mehrkomponenten-Kunststoffbauteils gelöst, in deren Verlauf ein Kunststoffbauteil und ein Träger mit mindestens einer Komponente überflutet und der Träger dadurch integraler Bestandteil des Mehrkomponenten-Kunststoffbauteils wird. Die erfindungsgemäße Vorrichtung weist eine Spritzgusseinheit zum Spritzgießen eines Kunststoffbauteils und zu dessen Überfluten mit mindestens einer Komponente auf, wobei die Spritzgusseinheit eine entsprechende Werkzeugkavität enthält. Die erfindungsgemäße Vorrichtung zeichnet sich dadurch aus, dass die Spritzgusseinheit so ausgestaltet ist, dass ein vorstehend beschriebener Träger zum Abdichten der Werkzeugkavität der Spritzgusseinheit im Verlauf der Herstellung des Mehrkomponenten-Kunststoffbauteils mit seiner ersten Hauptseite an das Kunststoffbauteil angelegt und dann zumindest die erste Hauptseite von dessen zweitem Randbereich von der mindestens einen Komponente überflutet werden kann. In anderen Worten muss die Anordnung so getroffen sein, dass das entsprechende Einsetzen bzw. Einlegen des Trägers in das Werkzeug in der Weise, dass der Träger an dem Kunststoffbauteil anliegt, mit dem er zu verbinden ist, problemlos und in einer den weiteren Ablauf nicht behindernden Weise möglich ist. Die Vorrichtung muss somit entsprechend ausgestaltet bzw. gegenüber den bekannten Vorrichtungen abgeändert sein, dass auch ein Träger mit entsprechend geformtem Umfangsrand eingesetzt werden kann. Außerdem muss der erfindungsgemäßen Vorrichtung eine Umbiegeeinrichtung zugeordnet sein, die zum Umbiegen des ersten Randbereichs des Trägers derart, dass die zweite Hauptseite des ersten Randbereichs in etwa gegenüber der zweiten Hauptseite des zentralen Bereichs zu liegen kommt, geeignet ist. In anderen Worten muss der erste Randbereich des Trägers um etwa 180° von der Umbiegeeinrichtung umgebogen bzw. umgeschlagen werden können, wobei der zweite Randbereich als Filmscharnier dient. Es kann hinsichtlich eines schnelleren Arbeitsablaufs bzw. eines höheren Durchsatzes bei der Herstellung von Mehrkomponenten-Kunststoffbauteilen von Vorteil sein, wenn die Umbiegeeinrichtung in die erfindungsgemäße Vorrichtung integriert und nicht als eigene, nachfolgende Station vorgesehen ist. Hierdurch kann beispielsweise eine effizientere Herstellung der Mehrkomponenten-Kunststoffbauteile sichergestellt werden.

Die der Erfindung zu Grunde liegende Aufgabe wird außerdem gelöst mit einem Verfahren zur Herstellung eines Mehrkomponenten-Kunststoffbauteils, bei der ein Kunststoffbauteil und ein Träger aus Kunststoff mit mindestens einer Komponente überflutet und der Träger integraler Bestandteil des Mehrkomponenten-Kunststoffbauteils wird. Das Verfahren umfasst die folgenden Schritte: ein Kunststoffbauteil wird bereitgestellt, was beispielsweise durch Spritzen des Kunststoffbauteils in derjenigen Spritzgießvorrichtung erfolgt, in der auch das Überfluten erfolgt. Außerdem wird ein Träger gemäß der vorstehenden Beschreibung bereitgestellt, was ebenfalls durch Spritzen des Trägers in der gleichen Vorrichtung erfolgen kann. Außerdem wird der Träger an das Kunststoffbauteil angelegt bzw. angelegt gelassen, sofern sich der Träger nach dessen Spritzen bereits an dem Kunststoffbauteil befindet. Schließlich wird das Kunststoffbauteil mit der mindestens einen Komponente überflutet, wobei zusätzlich auch zumindest der zweite Randbereich des Trägers (d.h. das Filmscharnier) mit überflutet wird. Schließlich wird der erste Randbereich umgeschlagen bzw. umgebogen, indem der Träger am zweiten Randbereich so umgebogen bzw. umgeschlagen wird, dass die zweite Hauptseite des Randbereichs gegenüber der zweiten Hauptseite des zentralen Bereichs zu liegen kommt. Dies entspricht einem Umschlagen des ersten Randbereichs um etwa 180°, also zur Bauteilinnenseite hin.

Nach dem Umfalten bzw. Umlegen des ersten Randbereichs wird vorzugsweise dafür gesorgt, wie bereits im Zusammenhang mit dem erfindungsgemäßen Träger beschrieben, dass der umgeklappte erste Randbereich mit dem zentralen Bereich verbunden wird, was vorzugsweise durch entsprechende Rasteinrichtungen oder Schnapphaken erfolgt.

Wie bereits zuvor ausgeführt, wird der erfindungsgemäße Träger so gestaltet, dass im Außenbereich ein sehr dünner umlaufender Rand vorgesehen wird, der ein sogenanntes Filmscharnier bildet. Dieser Bereich wird mit der einen oder mit mehreren Komponenten überflutet und danach mechanisch umgelegt bzw. zur Bauteilinnenseite hin gefaltet und gegebenenfalls verrastet. Dadurch ist von außen kein Rand mit dem Trägermaterial sichtbar, sondern das gesamte Mehrkomponenten-Kunststoffbauteil präsentiert sich mit einheitlicher und ästhetisch ansprechender Oberfläche.

Ein weiterer Vorteil der vorliegenden Erfindung besteht darin, dass die Anguss- und die Überlaufkavität nicht mehr in einem separaten Arbeitsschritt entfernt werden müssen, da sie durch das Umfalten bzw. Umklappen des ersten Randbereichs unter dem Bauteil versteckt sind.

Da der Rand vollständig um das Bauteil verläuft, kann auch von einer verbesserten Entlüftung der Werkzeugkavität ausgegangen werden, wodurch bei der Herstellung der Mehrkomponenten-Kunststoffbauteile der Ausschuss verringert werden kann, wie er sonst durch Luftblasen hervorgerufen würde.

Durch die vorliegende Erfindung ist es möglich, mit dem Umfalten des ersten Randbereichs, was auch als Flip-Umbug bezeichnet werden kann, das von den Kunden geforderte Design zu erzielen. Außerdem wird durch die vorliegende Erfindung die Konstruktion hinsichtlich der Bauteile und der Werkzeuge einfacher.

Die vorliegende Erfindung ermöglicht auch ein effizienteres Herstellen der Mehrkomponenten-Kunststoffbauteile, da ein zusätzlicher Arbeitsschritt des Abstanzens oder Ablaserns vermieden werden kann

Weitere Vorteile, Merkmale und Besonderheiten der vorliegenden Erfindung ergeben sich aus der nachfolgenden Beschreibung vorteilhafter Ausführungsformen der Erfindung unter Bezug auf die beigefügten Zeichnungen. Es zeigen:
- Fig. 1: eine Schnittdarstellung durch eine vorteilhafte Ausführungsform eines erfindungsgemäßen Trägers mit einem aufgesetzten Kunststoffbauteil, wobei der erste Randbereich des Trägers nicht umgebogen ist und sowohl der Träger als auch das Kunststoffbauteil von einer Komponente überflutet sind;
- Fig. 2: eine Schnittdarstellung eines erfindungsgemäßen MehrkomponentenKunststoffbauteils mit bereits umgeklapptem erstem Seitenrand des Trägers; und
- Fig. 3: eine Draufsicht auf einen erfindungsgemäßen Träger mit aufgesetztem Kunststoffbauteil nach dem Überfluten, jedoch vor dem Umklappen der ersten Randbereiche des Trägers.

Für die nachfolgende Beschreibung einer vorteilhaften Ausführungsform eines erfindungsgemäßen Mehrkomponenten-Kunststoffbauteils 20 sowie eines darin enthaltenen Trägers 10 wird in beispielhafter Weise davon ausgegangen, dass es sich hierbei um eine Kopfstütze für ein Kraftfahrzeug handelt. Selbstverständlich ist die vorliegende Erfindung jedoch nicht auf dieses spezielle Beispiel beschränkt, sondern die Erfindung ist auf die unterschiedlichsten Kunststoffbauteile anwendbar. Gleiches gilt auch für die Beschreibung einer erfindungsgemäßen Vorrichtung 50 zum Herstellen des Mehrkomponenten-Kunststoffbauteils 20 sowie für das entsprechende Herstellungsverfahren.

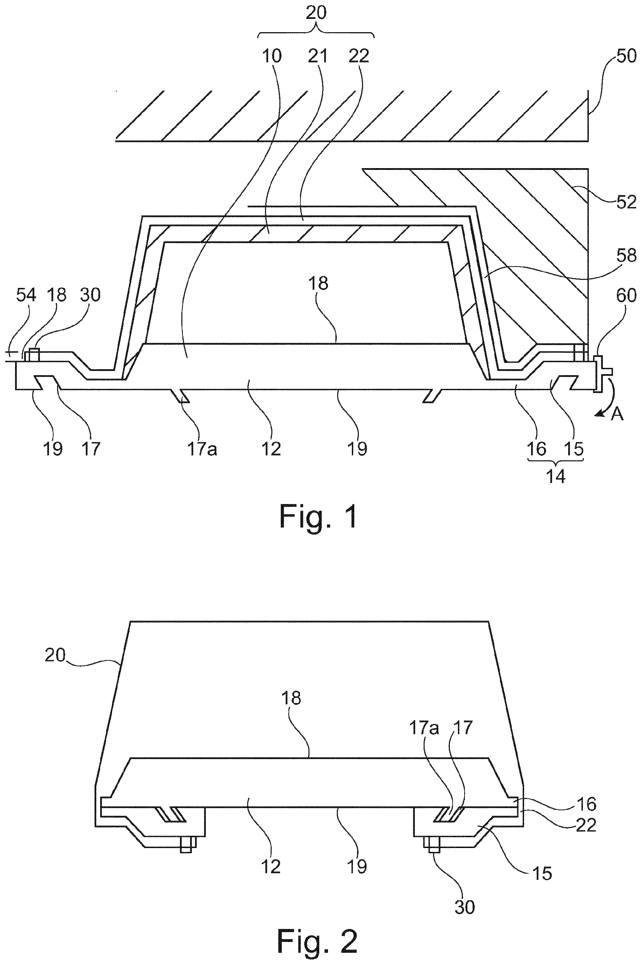

In Fig. 1 ist eine schematisch dargestellte, mit 50 bezeichnete Vorrichtung zur Herstellung eines Mehrkomponenten-Kunststoffbauteils 20 mit einer entsprechenden Gießform 52 dargestellt. Diese Gießform 52 ist Teil einer entsprechenden Gießform einer Spritzgusseinheit, in der eine Werkzeugkavität 58 zum Gießen bzw. Spritzgießen der Kopfstütze (bzw. des Mehrkomponenten-Kunststoffbauteils) 20 vorgesehen ist. Gemäß der Darstellung in Fig. 1 liegt ein Kunststoffbauteil 21 als Rohform der Kopfstütze bereits in gegossener Form in der Werkzeugkavität 58 vor. An der unten offenen Unterseite des Kunststoffbauteils 21 ist ein ebenfalls gegossener Träger 10 aus Kunststoff eingesetzt. Der Träger 10 weist einen zentralen Bereich 12 auf, der von unten in das Kunststoffbauteil 21 eingesetzt ist.

Der Träger 10 ist - abgesehen von einer gewissen Profilierung, auf die später eingegangen wird - als flächiges Bauteil ausgebildet und weist eine hier oben befindliche erste Hauptseite 18 sowie eine hier unten befindliche zweite Hauptseite 19 auf. Die Außenseite des Trägers 10 wird durch einen ersten Randbereich 15 gebildet. Zwischen dem ersten Randbereich 15 und dem zentralen Bereich 12 ist ein zweiter Randbereich 16 ausgebildet, der eine geringere Dicke aufweist als der erste Randbereich 15. Durch die geringere Dicke kann der Träger 16 am zweiten Randbereich 16 leicht umgeknickt, umgefaltet bzw. umgefalzt werden, so dass der erste Randbereich 15 und auch ein Teil des zweiten Randbereichs 16 um ca. 180° zur Unterseite bzw. der zweiten Hauptseite 19 des zentralen Bereichs 12 hin umgebogen werden können.

Durch einen hier nur schematisch dargestellten Einspritzkanal bzw. Angusskanal 54 in der Spritzgießvorrichtung 50 bzw. der Spritzgusseinheit 52 kann eine niedrigviskose Komponente 22 (oder auch mehrere dieser Komponenten) in die Werkzeugkavität 58 eingespritzt werden, wonach die Komponente 22 das Kunststoffbauteil 21 in der Werkzeug kavität 58 umfließt und schließlich auch einen Film in bzw. auf dem zweiten Randbereich 16 sowie auf dem ersten Randbereich 15 bildet. Bei dem zuvor beschriebenen Umklappen bzw. Umbiegen des Trägers 10 am zweiten Randbereich 16 dient dieser zweite Randbereich 16 dann als sogenanntes Filmscharnier. Der Träger 10 bildet zusammen mit dem aufgesetzten Kunststoffbauteil 21 eine Kopfstütze 20 (Mehrkomponenten-Kunststoffbauteil), die bzw. das an dem Seitenrand keinen sichtbaren Rand mit dem Träger 10, sondern eine einheitliche und ästhetisch sehr anspruchsvolle Oberfläche aufweist.

Auf der ersten Hauptseite 18 des ersten Randbereichs 15 ragen von der Oberfläche verschiedene Stifte bzw. Dome 30 hervor, die so weit von der ersten Hauptseite 18 emporragen, dass sie von der Komponente 22 zwar umspült, jedoch nicht überspült bzw. überdeckt werden. Nach Erstarren der Komponente 22 wird dadurch eine mechanische Verbindung zwischen der Komponente 22 und dem Träger 10 hergestellt, wodurch ein Absplittern bzw. Abblättern der Komponente 22 vom Träger 10 noch zuverlässiger verhindert werden kann.

Auf der zweiten Hauptseite 19 des ersten Randbereichs 15 sind sacklochartige Ausnehmungen 17 vorgesehen, deren Achse einen Winkel von etwa 30° bezüglich der Senkrechten auf die zweite Hauptfläche 19 aufweisen. An der zweiten Hauptfläche 19 des zentralen Bereichs 12 befinden sich von der zweiten Hauptfläche aus abstehende Vorsprünge 17a, die sich in etwa parallel zu den Ausnehmungen 17 erstrecken, also ebenfalls in einem Winkel von etwa 30° zur Senkrechten auf die zweite Hauptfläche 19. Selbstverständlich ist dieser Winkel von 30° nicht wesentlich für das Funktionieren der vorliegenden Erfindung, sondern es können auch andere Winkel vorgesehen sein. Wie aus der Darstellung von Fig. 1 (und ergänzend aus Fig. 2) ersichtlich ist, bilden die Ausnehmungen 17 zusammen mit den Stiften 17a jeweilige Verbindungselemente, die miteinander verrasten, sobald der erste Randbereich 15 an dem zweiten Randbereich 16 um ca. 180° nach innen bzw. unten auf die Bauteilinnenseite umgeklappt werden, wobei bei diesem Beispiel jeweils ein Stift 17a in eine Ausnehmung 17 einrastet. Dieser eingerastete Zustand ist in Fig. 2 besonders gut zu sehen. Selbstverständlich können die Verbindungselemente 17 und 17a auch in anderer Art und Weise ausgestaltet werden, um eine Rastverbindung oder auch allgemeiner eine gegenseitige Verriegelung des ersten Randbereichs 15 mit dem zentralen Bereich 12 zu gewährleisten.

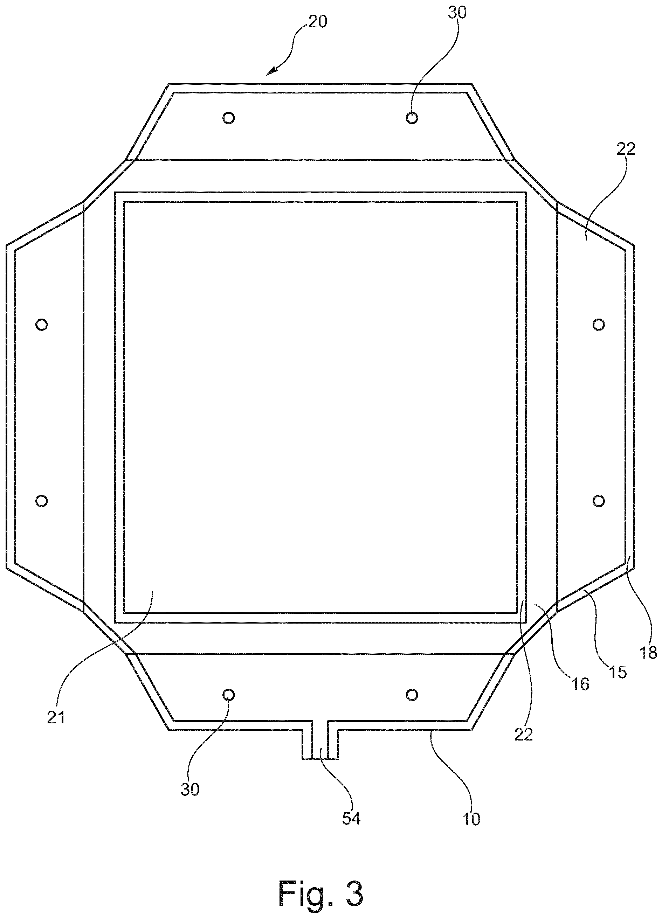

Gemäß der Darstellung in Fig. 3 ist der jeweilige erste Randbereich 15 eines hier beispielhaft mit quadratischem "Grundriss" angenommenen Kunststoffbauteils 21 an den betreffenden Ecken des Quadrats so abgeschrägt, dass die ersten Randbereiche 15 durch Umknicken bzw. Umfalten an den jeweiligen zweiten Randbereichen 16 vollständig auf die in der Zeichnung nicht sichtbare Seite des Kunststoffbauteils 21 umgefaltet werden können. Dabei wird auch der hier schematisch dargestellte Anguss 54 mit auf die nicht sichtbare Seite des Kunststoffbauteils umgeklappt, so dass er - genauso wie der hier nicht dargestellte Überlauf - nicht eigens entfernt zu werden braucht. Somit lässt sich ein erfindungsgemäßes Mehrkomponenten-Kunststoffbauteil 20 in einfacher Weise, also in wenigen Schritten herstellen, da die Schritte des Abstanzens bzw. Weglaserns von Anguss bzw. Überlauf entfallen können. Außerdem wird an den jeweiligen Seitenrändern des Mehrkomponenten-Kunststoffbauteils 20 kein sichtbarer Rand hergestellt, sondern das Mehrkomponenten-Kunststoffbauteil 20 präsentiert sich mit ästhetisch sehr ansprechender gleichmäßiger Oberfläche ohne störende Randeffekte. Das Umbiegen der ersten Randbereiche 15 mittels des sogenannten Flip-Umbugs ermöglicht somit eine hervorragende Oberfläche des Mehrkomponenten-Kunststoffbauteils 20. Dadurch wird auch die Konstruktion hinsichtlich des Werkzeugs einfacher. Da durch den Überlauf auch das Auftreten von Luftbläschen verhindert werden kann, wird auch der Ausschuss bei der Herstellung der erfindungsgemäßen Mehrkomponenten-Kunststoffbauteile reduziert.

Wie bereits oben ausgeführt, muss eine erfindungsgemäße Vorrichtung 50 zur Herstellung des Mehrkomponenten-Kunststoffbauteils 20 gegenüber den aus dem Stand der Technik bekannten Vorrichtungen dahingehend modifiziert werden, dass die Spritzgusseinheit 52 so auszugestalten bzw. umzubilden ist, dass der Träger 10, der ja zum Abdichten der Werkzeugkavität während des Überflutens sorgen muss, so an die Werkzeugkavität 58 angelegt werden kann, dass diese einerseits gut genug abgedichtet wird und andererseits die mindestens eine Komponente 22 auf den zweiten Randbereich 16 und auf den ersten Randbereich 15 fließen lässt. Außerdem muss der Vorrichtung 50 eine hier nur schematisch als ein Greifer dargestellte Umbiegeeinrichtung 60 zugeordnet sein, der den ersten Randbereich in der durch den Pfeil A angegebenen Richtung umbiegt. Die Umbiegeeinrichtung 60 muss selbstverständlich so beweglich ausgestaltet sein, dass der erste Randbereich 15 ca. um 180° umgebogen werden kann, so dass die zweite Hauptseite 19 des ersten Randbereichs gegenüber der zweiten Hauptseite 19 des zentralen Bereichs 12 zu liegen kommt und ggf. die Verbindungseinrichtungen 17 und 17a miteinander verrastet werden können. Es kann von Vorteil sein, wenn die Umbiegeeinrichtung 60 als integraler Bestandteil aufgenommen ist und nicht in einer eigenen Umbiegestation angeordnet ist, die erst nach Entformen des überfluteten Kunststoffbauteils 21 das Umbiegen des ersten Randbereichs 15 vornimmt.

Bei dem erfindungsgemäßen Verfahren zur Herstellung des Mehrkomponenten-Kunststoffbauteils 20 wird zunächst ein Kunststoffbauteil sowie ein mit ihm zu verbindender Träger gemäß vorstehender Beschreibung bereitgestellt. "Bereitstellen" bedeutet in diesem Zusammenhang, dass diese Teile entweder gegossen werden oder zugeführt und in die jeweilige Werkzeugkavität eingesetzt werden. Danach wird das Kunststoffbauteil 21 so überflutet, dass zumindest auch der zweite Randbereich 16 an der ersten Hauptseite 18 des Trägers 10 mit überflutet wird, wobei vorzugsweise auch ein Teil des ersten Randbereichs 15 mit überflutet wird, damit die Komponente 22 auf dem Träger 10 insgesamt und insbesondere am Umfangsrand 14 so gut wie möglich haftet. Danach wird der erste Randbereich 15 durch Umbiegen des Trägers 10 am zweiten Randbereich 16 umgeschlagen, so dass die zweite Hauptseite 19 des Randbereichs 15 gegenüber oder an der zweiten Hauptseite 19 des zentralen Bereichs 12 zu liegen kommt, wobei vorzugsweise Verbindungselemente 17 und 17a gemäß vorstehender Beschreibung in gegenseitige Verrastung gebracht werden, so dass der erste Randbereich 15 fest mit dem zentralen Bereich 12 verbunden ist.

Eine sehr einfache und schnelle Verfahrensführung ergibt sich dann, wenn die Schritte des Bereitstellens und des Anlegens des Trägers 10 durch Spritzgießen des Trägers 10 in situ, also an Ort und Stelle der vorgesehenen weiteren Verwendung - erfolgen, ebenso wie die Bereitstellung des Kunststoffbauteils durch Spritzgießen dieses Kunststoffbauteils 21 in der Werkzeugkavität 58.

Es ist festzuhalten, dass die unter Bezug auf die beschriebene Ausführungsform beschriebenen Merkmale der Erfindung, wie beispielsweise die Art und Ausgestaltung des ersten und des zweiten Randbereichs sowie der Verbindungselemente und der Haltevorsprünge, auch bei anderen Ausführungsformen bzw. Beispielen vorhanden sein können, außer wenn es anders angegeben ist oder sich aus technischen Gründen von selbst verbietet.

### Bezugszeichenliste

- 10: Träger
- 12: Zentraler Bereich
- 14: Umfangsrand
- 15: Erster Randbereich
- 16: Zweiter Randbereich
- 17: Erstes Verbindungselement/Ausnehmung
- 17a: Zweites Verbindungselement/Stift
- 18: Erste Hauptseite
- 19: Zweite Hauptseite
- 20: Mehrkomponenten-Kunststoffbauteil
- 21: Kunststoffbauteil
- 22: Komponente
- 30: Haltevorsprung
- 50: (Spritzguss-)Vorrichtung
- 52: Gießform/Spritzgusseinheit
- 54: Angusskanal
- 58: Werkzeug kavität
- 60: Umbiegeeinrichtung
- A: Umbiegerichtung

## Patentansprüche

1. Mehrkomponenten-Kunststoffbauteil (20), **gekennzeichnet durch** einen Träger (10) aus Kunststoff zum Abdichten einer Werkzeugkavität (8) bei der Herstellung des Mehrkomponenten-Kunststoffbauteils (20), bei der ein Kunststoffbauteil (21) und der Träger (10) mit mindestens einer Komponente (22) überflutet und der Träger (10) integraler Bestandteil des Mehrkomponenten-Kunststoffbauteils (20) wird, wobei der Träger einen zentralen Bereich (12) zum Abdichten der Werkzeugkavität (8) bei in die Werkzeugkavität (8) eingesetztem Kunststoffbauteil (21) aufweist, wobei der Träger (10) eine der Werkzeugkavität (8) zugewandte erste Hauptseite (18) sowie eine von der ersten Hauptseite (18) abgewandte zweite Hauptseite (19) aufweist, wobei der Träger (10) einen Umfangsrand (14) aufweist, der sich über den zentralen Bereich (12) und über den äußeren Umfang der Werkzeugkavität (8) hinaus erstreckt, wobei der Umfangsrand (14) so ausgestaltet und anordenbar ist, dass er auf seiner ersten Hauptseite (18) von der mindestens einen Komponente (22) überflutet werden kann, wobei der Träger (10) einen ersten Randbereich (15) zur Bildung eines umschlagbaren Überstands sowie einen zwischen dem zentralen Bereich (12) und dem ersten Randbereich (15) angeordneten zweiten Randbereich (16) zur Bildung eines Filmscharniers aufweist, wobei der erste Randbereich (15) des Trägers (10) so umgebogen ist, dass seine zweite Hauptseite (19) der zweiten Hauptseite (19) des zentralen Bereichs (12) gegenüberliegt, wobei ein auf die erste Hauptseite (18) des zentralen Bereichs (12) des Trägers (10) aufgesetztes Kunststoffbauteil (21) vorgesehen ist und wobei mindestens eine **durch** Überfluten aufgebrachte Komponente (22) vorgesehen ist, welche das Kunststoffbauteil (21) und zumindest die erste Hauptseite (18) des zweiten Randbereichs (16) bedeckt.

2. Mehrkomponenten-Kunststoffbauteil nach Anspruch 1,
**dadurch gekennzeichnet, dass** auf der zweiten Hauptseite (19) des ersten Randbereichs (15) erste Verbindungselemente (17) sowie auf der zweiten Hauptseite (19) des zentralen Bereichs (12) zweite Verbindungselemente (17a) vorgesehen sind, wobei die ersten Verbindungselemente (17) und die zweiten Verbindungselemente (17a) so angeordnet und ausgestaltet sind, dass nach einem Umbiegen des ersten Randbereichs (15) derart, dass dessen zweite Hauptseite (19) der zweiten Hauptseite (19) des zentralen Bereichs (12) gegenüberliegt, jeweils ein erstes Verbindungselement (17) mit einem zweiten Verbindungselement (17a) verbunden ist.

3. Mehrkomponenten-Kunststoffbauteil nach Anspruch 2,
**dadurch gekennzeichnet, dass** die ersten Verbindungselemente (17) und die zweiten Verbindungselemente (17a) jeweils als Rastelemente ausgebildet sind.

4. Mehrkomponenten-Kunststoffbauteil nach Anspruch 2 oder 3,
**dadurch gekennzeichnet, dass** jeweils ein erstes Verbindungselement (17) und ein zugeordnetes zweites Verbindungselement (17a) ein Paar bilden, das einen Rastvorsprung und eine zugehörige Rastausnehmung umfasst.

5. Mehrkomponenten-Kunststoffbauteil nach einem der vorhergehenden Ansprüche,
**dadurch gekennzeichnet, dass** sich von der ersten Hauptseite (17a) des ersten Randbereichs (15) aus Haltevorsprünge (30) von der ersten Hauptseite (18) weg erstrecken, wobei vorzugsweise die Haltevorsprünge (30) in der Richtung in etwa senkrecht zur ersten Hauptseite (18) weiter von dem ersten Randbereich (15) abstehen, als es der zu erwartenden Schichtdicke der mindestens einen Komponente (22) entspricht.

6. Vorrichtung (50) zur Herstellung eines Mehrkomponenten-Kunststoffbauteils (20), bei der ein Kunststoffbauteil (21) und ein Träger (10) mit mindestens einer Komponente (22) überflutet und der Träger (10) integraler Bestandteil des Mehrkomponenten-Kunststoffbauteils (20) wird,
mit einer eine Werkzeugkavität (8) aufweisenden Spritzgusseinheit (52) zum Spritzgießen eines Kunststoffbauteils (21) und zu dessen Überfluten mit mindestens einer Komponente (22),
**dadurch gekennzeichnet, dass**
- die Spritzgusseinheit (52) so ausgestaltet ist, dass ein Träger (10) aus Kunststoff zum Abdichten der Werkzeugkavität (8) der Spritzgusseinheit (52) bei der Herstellung des Mehrkomponenten-Kunststoffbauteils (20) verwendbar ist, wobei der Träger einen zentralen Bereich (12) zum Abdichten der Werkzeugkavität (8) bei in die Werkzeugkavität (8) eingesetztem Kunststoffbauteil (21) aufweist, wobei der Träger (10) eine der Werkzeugkavität (8) zugewandte erste Hauptseite (18) sowie eine von der ersten Hauptseite (18) abgewandte zweite Hauptseite (19) aufweist, wobei der Träger (10) einen Umfangsrand (14) aufweist, der sich über den zentralen Bereich (12) und über den äußeren Umfang der Werkzeugkavität (8) hinaus erstreckt, wobei der Umfangsrand (14) so ausgestaltet und anordenbar ist, dass er auf seiner ersten Hauptseite (18) von der mindestens einen Komponente (22) überflutet werden kann, wobei der Träger (10) einen ersten Randbereich (15) zur Bildung eines umschlagbaren Überstands sowie einen zwischen dem zentralen Bereich (12) und dem ersten Randbereich (15) angeordneten zweiten Randbereich (16) zur Bildung eines Filmscharniers aufweist, wobei der Träger (10) mit seiner ersten Hauptseite (18) an das Kunststoffbauteil (20) angelegt und zumindest die erste Hauptseite (18) von dessen zweitem Randbereich (16) von der mindestens einen Komponente (22) überflutet werden kann,
und
- der Vorrichtung (50) eine Umbiegeeinrichtung (60) zum Umbiegen des ersten Randbereichs (15) des Trägers (10) derart, dass die zweite Hauptseite (19) des ersten Randbereichs (15) gegenüber der zweiten Hauptseite (19) des zentralen Bereichs (12) zu liegen kommt, zugeordnet ist.

7. Vorrichtung (50) nach Anspruch 6,
**dadurch gekennzeichnet, dass** die Umbiegeeinrichtung (60) in die Vorrichtung (50) integriert ist.

8. Verfahren zur Herstellung eines Mehrkomponenten-Kunststoffbauteils (20), bei der ein Kunststoffbauteil (21) und ein Träger (10) aus Kunststoff mit mindestens einer Komponente (22) überflutet und der Träger (10) integraler Bestandteil des Mehrkomponenten-Kunststoffbauteils (20) wird, umfassend den Schritt des Bereitstellens eines Kunststoffbauteils (21),
**gekennzeichnet durch** folgende Schritte:
- Bereitstellen eines Trägers (10), wobei der Träger (10) einen zentralen Bereich (12) zum Abdichten der Werkzeugkavität (8) bei in die Werkzeugkavität (8) eingesetztem Kunststoffbauteil (21) aufweist, wobei der Träger (10) eine der Werkzeugkavität (8) zugewandte erste Hauptseite (18) sowie eine von der ersten Hauptseite (18) abgewandte zweite Hauptseite (19) aufweist, wobei der Träger (10) einen Umfangsrand (14) aufweist, der sich über den zentralen Bereich (12) und über den äußeren Umfang der Werkzeugkavität (8) hinaus erstreckt, wobei der Umfangsrand (14) so ausgestaltet und anordenbar ist, dass er auf seiner ersten Hauptseite (18) von der mindestens einen Komponente (22) überflutet werden kann, wobei der Träger (10) einen ersten Randbereich (15) zur Bildung eines umschlagbaren Überstands sowie einen zwischen dem zentralen Bereich (12) und dem ersten Randbereich (15) angeordneten zweiten Randbereich (16) zur Bildung eines Filmscharniers aufweist,
- Anlegen des Trägers (10) an das Kunststoffbauteil (21),
- Überfluten des Kunststoffbauteils (20) und zumindest der ersten Hauptseite (18) des zweiten Randbereichs (16) des Trägers (10) mit der mindestens einen Komponente (22), und
- Umschlagen des ersten Randbereichs (15) **durch** Umbiegen am zweiten Randbereich (16) derart, dass die zweite Hauptseite (19) des Randbereichs (15) gegenüber der zweiten Hauptseite (19) des zentralen Bereichs (12) zu liegen kommt.

9. Verfahren nach Anspruch 8,
**dadurch gekennzeichnet, dass** die Schritte des Bereitstellens und des Anlegens des Trägers (10) durch Spritzgießen des Trägers (10) in situ erfolgen.

10. Verfahren nach Anspruch 8 oder 9,
**dadurch gekennzeichnet, dass** auf der zweiten Hauptseite (19) des ersten Randbereichs (15) erste Verbindungselemente (17) sowie auf der zweiten Hauptseite (19) des zentralen Bereichs (12) zweite Verbindungselemente (17a) vorgesehen sind, wobei die ersten Verbindungselemente (17) und die zweiten Verbindungselemente (17a) so angeordnet und ausgestaltet sind, dass nach einem Umbiegen des ersten Randbereichs (15) derart, dass dessen zweite Hauptseite (19) der zweiten Hauptseite (19) des zentralen Bereichs (12) gegenüberliegt, jeweils ein erstes Verbindungselement (17) mit einem zweiten Verbindungselement (17a) verbunden ist.

11. Verfahren nach Anspruch 10,
**dadurch gekennzeichnet, dass** die ersten Verbindungselemente (17) und die zweiten Verbindungselemente (17a) jeweils als Rastelemente ausgebildet sind.

12. Verfahren nach Anspruch 10 oder 11,
**dadurch gekennzeichnet, dass** jeweils ein erstes Verbindungselement (17) und ein zugeordnetes zweites Verbindungselement (17a) ein Paar bilden, das einen Rastvorsprung und eine zugehörige Rastausnehmung umfasst.

13. Verfahren nach einem der Ansprüche 8 bis 12,
**dadurch gekennzeichnet, dass** sich von der ersten Hauptseite (17a) des ersten Randbereichs (15) aus Haltevorsprünge (30) von der ersten Hauptseite (18) weg erstrecken, wobei vorzugsweise die Haltevorsprünge (30) in der Richtung in etwa senkrecht zur ersten Hauptseite (18) weiter von dem ersten Randbereich (15) abstehen, als es der zu erwartenden Schichtdicke der mindestens einen Komponente (22) entspricht.

## Claims

1. A multicomponent plastic part (20), **characterized by** a support (10) made of plastic for sealing a tool cavity (8) during the production of the multicomponent plastic part (20), wherein at least one component (22) flows over a plastic part (21) and the support (10), and the support (10) becomes an integral component of the multicomponent plastic part (20), wherein the support has a central region (12) for sealing the tool cavity (8) when the plastic part (21) is inserted into the tool cavity (8), said support (10) having a first main face (18) facing the tool cavity (8) and a second main face (19) facing away from the first main face (18), wherein the support (10) has a peripheral edge (14) which extends beyond the central region (12) and the outer circumference of the tool cavity (8), said peripheral edge (14) being designed and able to be arranged such that the at least one component (22) can flow over the first main face (18) of the peripheral edge, wherein the support (10) has a first edge region (15) for forming a fold-over projection and a second edge region (16), which is arranged between the central region (12) and the first edge region (15) for forming a film hinge, wherein the first edge region (15) of the support (10) is bent so that its second main face (19) lies opposite the second main face (19) of the central region (12), wherein a plastic part (21) placed onto the first main face (18) of the central region (12) of the support (10) is provided and wherein at least one component (22), applied by flowing over, is provided, which covers the plastic part (21) and at least the first main face (18) of the second edge region (16).

2. The multicomponent plastic part according to Claim 1, **characterized in that** first connecting elements (17) are provided on the second main face (19) of the first edge region (15), and second connecting elements (17a) are provided on the second main face (19) of the central region (12), wherein the first connecting elements (17) and the second connecting elements (17a) are arranged and configured so that after a bending of the first edge region (15) such that its second main face (19) lies opposite the second main face (19) of the central region (12), respectively a first connecting element (17) is connected to a second connecting element (17a).

3. The multicomponent plastic part according to Claim 2,
**characterized in that** the first connecting elements (17) and the second connecting elements (17a) are respectively constructed as detent elements.

4. The multicomponent plastic part according to Claim 2 or 3,
**characterized in that** respectively a first connecting element (17) and an associated second connecting element (17a) form a pair which comprises a detent projection and an associated detent recess.

5. The multicomponent plastic part according to one of the preceding claims,
**characterized in that** from the first main face (17a) of the first edge region (15) retaining projections (30) extend away from the first main face (18), wherein preferably the retaining projections (30) protrude in the direction approximately perpendicularly to the first main face (18) further from the first edge region (15) than corresponding to the layer thickness to be expected of the at least one component (22).

6. A device (50) for the production of a multicomponent plastic part (20), in which a plastic part (21) and a support (10) is flowed over by at least one component (22) and the support (10) becomes an integral component of the multicomponent plastic part (20),
with an injection moulding unit (52) having a tool cavity (8) for the injection moulding of a plastic part (21) and for its flowing over with at least one component (22),
**characterized in that**
- the injection moulding unit (52) is configured so that a support (10) made of plastic is able to be used for sealing the tool cavity (8) of the injection moulding unit (52) during the production of the multicomponent plastic part (20), wherein the support has a central region (12) for sealing the tool cavity (8) with the plastic component (21) inserted into the tool cavity (8), wherein the support (10) has a first main face (18) facing the tool cavity (8) and a second main face (19) facing away from the first main face (18), wherein the support (10) has a peripheral edge (14) which extends beyond the central region (12) and the outer circumference of the tool cavity (8), wherein the peripheral edge (14) is designed and able to be arranged so that the at least one component (22) can flow over the first main face (18) of the peripheral edge, wherein the support (10) has a first edge region (15) for forming a fold-over projection and a second edge region (16), which is arranged between the central region (12) and the first edge region (15), for forming a film hinge, wherein the support (10) can be applied with its first main face (18) against the plastic part (20) and at least the first main face (18) of its second edge region (16) can be flowed over by the at least one component (22),
And
- there is associated with the device (50) a bending device (60) for bending the first edge region (15) of the support (10), such that the second main face (19) of the first edge region (16) comes to lie opposite the second main face (19) of the central region (12).

7. The device (50) according to Claim 6,
**characterized in that** the bending device (60) is integrated into the device (50).

8. A method for producing a multicomponent plastic part (20), in which a plastic part (21) and a support (10) made of plastic is flowed over by at least one component (22), and the support (10) is an integral component of the multicomponent plastic part (20), comprising the step of providing a plastic part (21),
**characterized by** the following steps:
- providing a support (10), wherein the support (10) has a central region (12) for sealing the tool cavity (8) with a plastic part (21) inserted into the tool cavity (8), wherein the support (10) has a first main face (18) facing the tool cavity (8) and a second main face (19) facing away from the first main face (18), wherein the support (10) has a peripheral edge (14), which extends beyond the central region (12) and the outer circumference of the tool cavity (8), wherein the peripheral edge (14) is designed and able to be arranged so that the at least one component (22) can flow over the first main face (18) of the peripheral edge, wherein the support (10) has a first edge region (15) for forming a fold-over projection and a second edge region (16), which is arranged between the central region (12) and the first edge region (15), for forming a film hinge,
- applying the support (10) against the plastic part (21),
- flowing over the plastic part (20) and at least the first main face (18) of the second edge region (16) of the support with the at least one component (22), and
- folding over the first edge region (15) by bending at the second edge region (16), such that the second main face (19) of the edge region (15) comes to lie opposite the second main face (19) of the central region (12).

9. The method according to Claim 8,
**characterized in that** the steps of providing and applying the support (10) take place by injection moulding of the support (10) in situ.

10. The method according to Claim 8 or 9, **characterized in that** first connecting elements (17) are provided on the second main face (19) of the first edge region (15) and second connecting elements (17a) are provided on the second main face (19) of the central region (12), wherein the first connecting elements (17) and the second connecting elements (17a) are arranged and configured so that after a bending of the first edge region (15) such that its second main face (19) lies opposite the second main face (19) of the central region (12), respectively a first connecting element (17) is connected to a second connecting element (17a).

11. The method according to Claim 10,
**characterized in that** the first connecting elements (17) and the second connecting elements (17a) are respectively constructed as detent elements.

12. The method according to Claim 10 or 11,
**characterized in that** respectively a first connecting element (17) and an associated second connecting element (17a) form a pair, which comprises a detent projection and an associated detent recess.

13. The method according to one of Claims 8 to 12,
**characterized in that** from the first main face (17a) of the first edge region (15) retaining projections (30) extend away from the first main face (18), wherein preferably the retaining projections (30) protrude in the direction approximately perpendicularly to the first main face (18) further from the first edge region (15) than corresponding to the layer thickness to be expected of the at least one component (22).

## Revendications

1. Élément constitutif (20) multicomposants en matière plastique, **caractérisé par** un support (10) en matière plastique destiné à assurer l'étanchéité d'une cavité d'outil (8) lors de la fabrication de l'élément constitutif (20) multicomposants en matière plastique, lors de laquelle on submerge un élément constitutif (21) en matière plastique et le support (10) d'au moins un composant (22) et le support (10) devient partie intégrante intégrale de l'élément constitutif (20) multicomposants en matière plastique, le support comportant une zone centrale (12) destinée à assurer l'étanchéité de la cavité d'outil (8), lorsque l'élément constitutif (21) en matière plastique est inséré dans la cavité d'outil (8), le support (10) comportant une première face principale (19) dirigée vers la cavité d'outil (8), ainsi qu'une deuxième face principale (19) opposée à la première face principale (18), le support (10) comportant un bord périphérique (14) qui s'étend au-delà de la zone centrale (12) et au-delà de la périphérie extérieure de la cavité d'outil (8), le bord périphérique (14) étant conçu et pouvant être placé de sorte à pouvoir être submergé sur sa première face principale (18) par l'au moins un composant (22), le support (10) comportant une première zone de bordure (15) pour former un porte à faux repliable ainsi qu'une deuxième zone de bordure (16) placée entre la zone centrale (12) et la première zone de bordure (15) pour former une charnière pelliculaire, la première zone de bordure (15) du support (10) étant cintrée de telle sorte que sa deuxième face principale (19) soit opposée à la deuxième face principale (19) de la zone centrale (12), un élément constitutif (21) en matière plastique posé sur la première face principale (18) de la zone centrale (12) du support (10) étant prévu et au moins un composant (22) appliqué par submersion étant prévu, lequel recouvre l'élément constitutif (21) en matière plastique et au moins la première face principale (18) de la deuxième zone de bordure (16).

2. Élément constitutif multicomposants en matière plastique selon la revendication 1,
**caractérisé en ce que** sur la deuxième face principale (19) de la première zone de bordure (15) sont prévus des premiers éléments d'assemblage (17), ainsi que sur la deuxième face principale (19) de la zone centrale (12) sont prévus des deuxièmes éléments d'assemblage (17a), les premiers éléments d'assemblage (17) et les deuxièmes éléments d'assemblage (17a) étant placés et conçus de sorte qu'après un cintrage de la première zone de bordure (15) de telle manière que la deuxième face principale (19) de celle-ci soit opposée à la deuxième face principale (19) de la zone centrale (12), chaque fois un premier élément d'assemblage (17) soit assemblé avec un deuxième élément d'assemblage (17a).

3. Élément constitutif multicomposants en matière plastique selon la revendication 2,
**caractérisé en ce que** les premiers éléments d'assemblage (17) et les deuxièmes éléments d'assemblage (17a) sont conçus chacun comme des éléments d'encliquetage.

4. Élément constitutif multicomposants en matière plastique selon la revendication 2 ou la revendication 3,
**caractérisé en ce que** chaque fois un premier élément d'assemblage (17) et un deuxième élément d'assemblage (17a) associé forment une paire qui comprend une saillie d'encliquetage et un évidement d'encliquetage correspondant.

5. Élément constitutif multicomposants en matière plastique selon l'une quelconque des revendications précédentes,
**caractérisé en ce qu'**à partir de la première face principale (17a) de la première zone de bordure (15), des saillies de retenue (30) s'étendent en s'éloignant de la première face principale (18), dans la direction approximativement à la perpendiculaire de la première face principale (18), les saillies de retenue (30) débordant de préférence de la première zone de bordure (15) plus loin que ce qui correspond à l'épaisseur de couche à attendre de l'au moins un composant (22).

6. Dispositif (50) destiné à fabriquer un élément constitutif (20) multicomposants en matière plastique sur lequel on submerge un élément constitutif (21) en matière plastique et un support (10) d'au moins un composant (22) et le support (10) devient partie intégrante intégrale de l'élément constitutif (20) multicomposants en matière plastique,
avec une unité de moulage par injection (52) comportant une cavité d'outil (8), pour le moulage par injection d'un élément constitutif (21) en matière plastique et pour sa submersion par au moins un composant (22),
**caractérisé en ce que**
- l'unité de moulage par injection (52) est constituée de telle sorte qu'un support (10) en matière plastique soit utilisable pour assurer l'étanchéité de la cavité d'outil (8) de l'unité de moulage par injection (52), lors de la fabrication de l'élément constitutif (20) multicomposants en matière plastique, le support comportant une zone centrale (12) destinée à assurer l'étanchéité de la cavité d'outil (8) lorsque l'élément constitutif (21) en matière plastique est inséré dans la cavité d'outil (8), le support (10) comportant une première face principale (18) dirigée vers la cavité d'outil (8), ainsi qu'une deuxième face principale (19) opposée à la première face principale (18), le support (10) comportant un bord périphérique (14) qui s'étend au-delà de la zone centrale (12) et au-delà de la périphérie extérieure de la cavité d'outil (8), le bord périphérique (14) étant conçu et pouvant être placé de sorte à pouvoir être submergé sur sa première face principale (18) par l'au moins un composant (22), le support (10) comportant une première zone de bordure (15) pour former un porte-à-faux repliable, ainsi qu'une deuxième zone de bordure (16) placée entre la première zone centrale (12) et la première zone de bordure (15), pour former une charnière pelliculaire, par sa première face principale (18), le support (10) étant adjacent à l'élément constitutif (20) en matière plastique et au moins la première face principale (18) de la deuxième zone de bordure (16) de celui-ci pouvant être submergée par l'au moins un composant (22)
Et
- au dispositif (50) est associé un système de cintrage (60) destiné à cintrer la première zone de bordure (15) du support (10), de telle sorte que la deuxième face principale (19) de la première zone de bordure (15) vienne se placer à l'opposée de la deuxième face principale (19) de la zone centrale (12).

7. Dispositif (50) selon la revendication 6,
**caractérisé en ce que** le système de cintrage (60) est intégré dans le dispositif (50).

8. Procédé destiné à la fabrication d'un élément constitutif (20) multicomposants en matière plastique, lors duquel on submerge un élément constitutif (21) en matière plastique et un support (10) en matière plastique avec au moins un composant (22) et le support (10) devient partie intégrante intégrale de l'élément constitutif (20) multicomposants en matière plastique, comprenant l'étape de la mise à disposition d'un élément constitutif (21) en matière plastique,
**caractérisé par** les étapes suivantes :
- de la mise à disposition d'un support (10), le support (10) comportant une zone centrale (12) destinée à assurer l'étanchéité de la cavité d'outil (8) lorsque l'élément constitutif (21) en matière plastique est inséré dans la cavité d'outil (8), le support (10) comportant une première face principale (18) qui est dirigée vers la cavité d'outil (8), ainsi qu'une deuxième face principale (19) opposée à la première face principale (18), le support (10) comportant un bord périphérique (14) qui s'étend au-delà de la zone centrale (12) et au-delà de la périphérie extérieure de la cavité d'outil (8), le bord périphérique (14) étant conçu et pouvant être placé de sorte à pouvoir être submergé sur sa première face principale (18), par l'au moins un composant (22), le support (10) comportant une première zone de bordure (15) pour former un porte-à-faux repliable, ainsi qu'une deuxième zone de bordure (16) placée entre la zone centrale (12) et la première zone de bordure (15), pour former une charnière pelliculaire,
- de l'appui du support (10) sur l'élément constitutif (21) en matière plastique,
- de la submersion de l'élément constitutif (20) en matière plastique et d'au moins la première face principale (18) de la deuxième zone de bordure (16) du support (10) avec l'au moins un composant (22), et
- du repliage de la première zone de bordure (15) par cintrage sur la deuxième zone de bordure (16), de telle sorte que la deuxième face principale (19) de la zone de bordure (15) vienne se placer à l'opposée de la deuxième face principale (19) de la zone centrale (12).

9. Procédé selon la revendication 8,
**caractérisé en ce que** les étapes de la mise à disposition et de l'appui du support (10) s'effectuent par moulage par injection du support (10) in situ.

10. Procédé selon la revendication 8 ou la revendication 9,
**caractérisé en ce que** sur la deuxième face principale (19) de la première zone de bordure (15) sont prévus des premiers éléments d'assemblage (17), ainsi que sur la deuxième face principale (19) de la zone centrale (12) sont prévus des deuxièmes éléments d'assemblage (17a),
les premiers éléments d'assemblage (17) et les deuxièmes éléments d'assemblage (17a) étant placés et conçus de telle sorte qu'après un cintrage de la première zone de bordure (15) de telle sorte que sa deuxième face principale (19) soit opposée à la deuxième face principale (19) de la zone centrale (12), chaque fois un premier élément d'assemblage (17) soit assemblé avec un deuxième élément d'assemblage (17a).

11. Procédé selon la revendication 10,
**caractérisé en ce que** les premiers éléments d'assemblage (17) et les deuxièmes éléments d'assemblage (17a) sont conçus chacun en tant qu'éléments d'encliquetage.

12. Procédé selon la revendication 10 ou la revendication 11,
**caractérisé en ce que** chaque fois un premier élément d'assemblage (17) et un deuxième élément d'assemblage (17a) associé forment une paire qui comprend une saillie d'encliquetage et un évidement d'encliquetage correspondant.

13. Procédé selon l'une quelconque des revendications 8 à 12,
**caractérisé en ce qu'**à partir de la première face principale (17a) de la première zone de bordure (15), des saillies de retenue (30) s'étendent en s'éloignant de la première face principale (18), de préférence les saillies de maintien (30) débordant de la première zone de bordure (15), dans la direction approximativement à la perpendiculaire de la première face principale (18) plus loin que ce qui correspond à l'épaisseur de couche à attendre de l'au moins un composant (22).
